(19) Europäisches Patentamt
European Patent Office
Office européen des brevets

(11) **EP 4 109 352 B1**

(12) **EUROPEAN PATENT SPECIFICATION**

(45) Date of publication and mention
of the grant of the patent:
**29.10.2025 Bulletin 2025/44**

(51) International Patent Classification (IPC):
*G06N 3/0495* (2023.01)     *G06N 3/082* (2023.01)
*G06N 3/063* (2023.01)

(21) Application number: **22167848.5**

(22) Date of filing: **12.04.2022**

(52) Cooperative Patent Classification (CPC):
**G06N 3/082; G06N 3/0464; G06N 3/0495;**
G06N 3/063

(54) **COMPUTER-READABLE RECORDING MEDIUM, INFORMATION PROCESSING METHOD, AND INFORMATION PROCESSING APPARATUS**

COMPUTERLESBARES AUFZEICHNUNGSMEDIUM, INFORMATIONSVERARBEITUNGSVERFAHREN UND INFORMATIONSVERARBEITUNGSGERÄT

SUPPORT D'ENREGISTREMENT LISIBLE PAR ORDINATEUR, PROCÉDÉ DE TRAITEMENT D'INFORMATIONS ET APPAREIL DE TRAITEMENT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2021 JP 2021104442**

(43) Date of publication of application:
**28.12.2022 Bulletin 2022/52**

(73) Proprietor: **FUJITSU LIMITED**
**Kawasaki-shi, Kanagawa 211-8588 (JP)**

(72) Inventors:
• **GUO, Jiajun**
**Kawasaki-shi, Kanagawa, 211-8588 (JP)**
• **KATO, Masaya**
**Kawasaki-shi, Kanagawa, 211-8588 (JP)**
• **AKAO, Kazutoshi**
**Kawasaki-shi, Kanagawa, 211-8588 (JP)**
• **FUKUSHI, Tatsuya**
**Kawasaki-shi, Kanagawa, 211-8588 (JP)**
• **KATSUKI, Takashi**
**Kawasaki-shi, Kanagawa, 211-8588 (JP)**
• **SAWADA, Takashi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(56) References cited:
**WO-A1-2020/190526**

• HAN DONGHYEON ET AL: "HNPU: An Adaptive DNN Training Processor Utilizing Stochastic Dynamic Fixed-Point and Active Bit-Precision Searching", IEEE JOURNAL OF SOLID-STATE CIRCUITS, IEEE, USA, vol. 56, no. 9, 23 March 2021 (2021-03-23), pages 2858 - 2869, XP011874674, ISSN: 0018-9200, [retrieved on 20210825], DOI: 10.1109/JSSC.2021.3066400
• HAN DONG ET AL: "Float-Fix: An Efficient and Hardware-Friendly Data Type for Deep Neural Network", INTERNATIONAL JOURNAL OF PARALLEL PROGRAMMING, PLENUM PRESS, NEW YORK, US, vol. 47, no. 3, 29 May 2019 (2019-05-29), pages 345 - 359, XP036823961, ISSN: 0885-7458, [retrieved on 20190529], DOI: 10.1007/S10766-018-00626-7
• SAI QIAN ZHANG ET AL: "FAST: DNN Training Under Variable Precision Block Floating Point with Stochastic Rounding", ARXIV.ORG, CORNELL UNIVERSITY LIBRARY, 201 OLIN LIBRARY CORNELL UNIVERSITY ITHACA, NY 14853, 28 October 2021 (2021-10-28), XP091081580
• KUMMER LORENZ ET AL: "Adaptive Precision Training (AdaPT): A dynamic fixed point quantized training approach for DNNs", 27 August 2021 (2021-08-27), pages 1 - 19, XP055962675, Retrieved from the Internet <URL:https://arxiv.org/pdf/2107.13490.pdf> [retrieved on 20220920]

EP 4 109 352 B1

**EP 4 109 352 B1**

**Description**

FIELD

The embodiments discussed herein are related to a computer-readable recording medium, an information processing method, and an information processing apparatus.

BACKGROUND

In recent years, an arithmetic precision optimization technique has been attracting attention among techniques for enabling high-speed machine learning. Although 32-bit floating-point numbers are used in general for operations in machine learning, there are some cases where a smaller number of bits is sufficient for solving a problem using machine learning. Benefits such as a higher calculation speed, improved power performance, and memory resource saving are delivered when operations are performed with a smaller number of bits.

At present, many companies are making efforts to develop or apply arithmetic precision optimization techniques. For example, a technique for performing operations with a smaller number of bits by using 8-bit or 16-bit floating-point numbers on a graphics processing unit (GPU) is known. A technique for performing inference with 8-bit integers by using a tensor processing unit (TPU), which is a processor dedicated to tensor operations, is also known.

On these backgrounds, a processor that changes fixed-point representations in accordance with stages in machine learning to perform operations at optimum precision levels has been proposed. This processor is designed to be dedicated particularly to deep learning, a type of machine learning, and optimizes arithmetic precision by utilizing characteristics that deep learning has in accordance with progress of the training. These characteristics are "an increasingly smaller variation between calculated numerical values between an iteration and the next" and "an increasingly narrower distribution of values that a tensor has". Here, one iteration corresponds to one repetition in machine learning.

In learning, training using the conventionally used 32-bit floating-point format is conducted during the first half (which may be referred to as "pre-learning" hereinbelow) thereof where the variation of numerical values between an iteration and the next and the variance of values that a tensor has are relatively large. Training using 8-bit or 16-bit fixed-point operations for which the decimal-point position can be changed is conducted during the last half (which may be referred to also as "main learning" hereinbelow) thereof where the variance becomes increasingly smaller. Examples of a 32-bit floating-point operation include an FP32 operation, and examples of an 8-bit or 16-bit fixed-point operation include a deep learning integer (DL-INT) operation and a quantized integer (QINT) operation.

In fixed-point operations, data can be represented in 8 bits or 16 bits by adjusting the decimal-point positions of numerical values, as appropriate. For the DL-INT operations, decimal-point positions are determined by values (which may be referred to as "Q-values" hereinbelow) each determined based on the distribution (which may be referred to as "statistical information" hereinbelow) of respective decimal points of elements of a corresponding tensor. Thereafter, for example, when performing operations, the operations are performed with values read out from numerical data represented in 8 bits and the Q-values.

For reference, when the Q-value is calculated, the calculation is performed with the value "0", which is implementation-dependent, treated as an irregular value. The reason for this is that, because "0" is used as a mask for a tensor or used for padding a region of an image in some cases in deep learning operations, numerical data is difficult to be fully expressed when "0" is incorporated as a regular value in the Q-value calculations.

In addition, 8-bit or 16-bit operations are disadvantageous in being more likely to result in failed machine learning. Therefore, as a means to avoid failures in learning, a method is available in which: a state in the training is stored as a check point regularly, for example, at the frequency of once in five thousand iterations; and recalculations are performed from the check point when a failure in learning has occurred. Thus, in deep learning in general, training is progressed with such check points regularly created.

Conventional techniques are disclosed in Japanese Laid-open Patent Publication No. 07-84975, Japanese Laid-open Patent Publication No. 2019-125014, Japanese Laid-open Patent Publication No. 2020-161031, U.S. Patent No. 5845051, and International Publication Pamphlet No. WO 2018/139266.

In conventional methods, however, a number of wasteful calculations are performed because training needs to be progressed until a failure in machine learning becomes apparent in the form of, for example, no decrease in lost value or obtainment of a not-a-number (NaN) value. In addition, returning to a check point is unable to eliminate the difficulty of determining up to what point training had been conducted normally. Furthermore, in conventional methods, for example, there is no mechanism that enables returning to 8-bit data type operations after switching to FP32 operations, and calculations after the switching need to keep being performed using FP32 operations.

WO 2020/190526 A1 relates to mixed precision training of an artificial neural network (ANN). Certain portions and/or steps of an ANN may be selected to use higher or lower precision values when training. Additionally, or alternatively, early phases of training are accurate enough with lower levels of precision to quickly refine an ANN model, while higher levels of precision may be used to increase accuracy for later steps and epochs. Similarly, different gates of a long short-term memory (LSTM) may be supplied with values having different precisions.

Accordingly, it is an object in one aspect of an embodiment of the invention to enhance calculation efficiency in deep learning.

SUMMARY

The present invention is defined in the appended independent claims. Further preferred embodiments are defined in the dependent claims.

According to an aspect of an embodiment, a non-transitory computer-readable recording medium stores a program that causes a computer to execute a process including detecting, in deep learning, a sign of a failure in learning in operations that are performed with a lower number of bits compared with operations that are performed with a certain number of bits, rolling back to an operation where the sign is detected and performing a recalculation by an operation with the certain number of bits, determining whether returning from operations with the certain number of bits to operations with the lower number of bits is allowed, and when the returning to operations with the lower number of bits is allowed, switching to operations with the lower number of bits.

BRIEF DESCRIPTION OF DRAWINGS

FIG. 1 is a view illustrating an example of a calculation by an information processing apparatus 100 according to a first embodiment;

FIG. 2 is a flowchart illustrating the flow of a usage scene for a user according to the first embodiment;

FIG. 3 is a block diagram illustrating the functional configuration of the information processing apparatus 100 according to the first embodiment;

FIG. 4 is a view illustrating an example of an abnormality detection method according to the first embodiment;

FIG. 5 is a view illustrating another example of the abnormality detection method according to the first embodiment;

FIG. 6 is a view illustrating an example of return processing performed after abnormality avoiding processing according to the first embodiment;

FIG. 7 is a view illustrating an example of functional blocks in the return processing according to the first embodiment;

FIG. 8 is a view illustrating an example of a data flow during normal operation according to the first embodiment;

FIG. 9 is a view illustrating an example of Q-values according to the first embodiment;

FIG. 10 is a view illustrating an example of a processing flow (1) of a main process according to the first embodiment;

FIG. 11 is a view illustrating an example of a processing flow (2) of the main process according to the first embodiment;

FIG. 12 is a view illustrating an example of a processing flow of a sub-process according to the first embodiment; and

FIG. 13 is a diagram illustrating a hardware configuration example.

DESCRIPTION OF EMBODIMENTS

Preferred embodiments of the present invention will be explained with reference to accompanying drawings. These embodiments are not intended to limit this invention. The embodiments can be combined as appropriate to an extent that does not involve inconsistency.

[a] First Embodiment

Description of Information Processing Apparatus 100

An information processing apparatus 100 according to a first embodiment is an example of a computer that constructs a machine learning model using a machine learning framework that provides the function of deep learning or the like. In deep learning, arithmetic processing is optimized in the following manner. During the pre-learning that corresponds to the first half thereof, the variation of numerical values between an iteration and the next and the variance of values that a tensor has are relatively large, and training is therefore conducted using 32-bit floating-point operations. During the main learning that corresponds to the last half thereof, training using 8-bit or 16-bit fixed-point operations for which the decimal-point position can be changed is conducted.

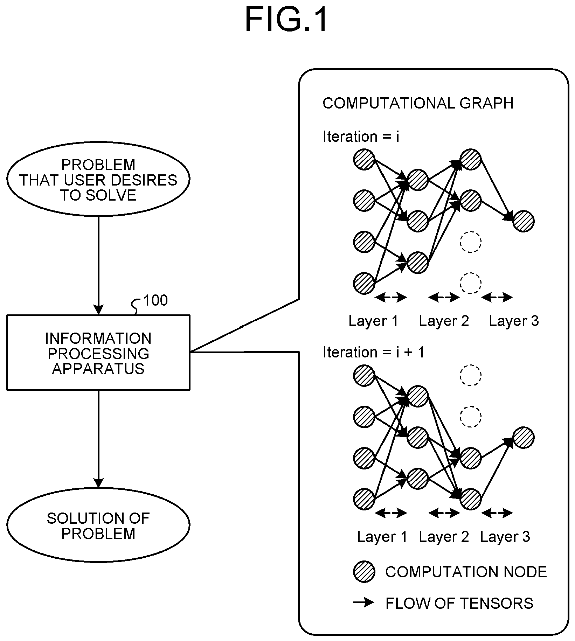

FIG. 1 is a view illustrating an example of a calculation by the information processing apparatus 100 according to the first embodiment. As illustrated in FIG. 1, upon receiving input of a problem in that a user desires to solve, the information processing apparatus 10 defines a computational model to be used for deriving a solution and performs learning on the computational model, thereby deriving a solution to the problem.

An example of a computational model illustrated in FIG. 1 represents a structure in which the structure of a graph changes from the iteration = i to the iteration = i + 1. In general, statistical information is managed in association with respective nodes that can be identified by "computational graph structure information". When an operation is performed at each node of the computational graph, training is conducted using, instead of a decimal-point position that corresponds to the current iteration, statistical information of an output of a corresponding operation in the immediately preceding iteration of the current iteration. A computational graph is a graph constructed as a combination of operations and, in the case of deep learning, is constructed with operations such as Add, Mul, Sum, Matrix Multiply, and Convolution.

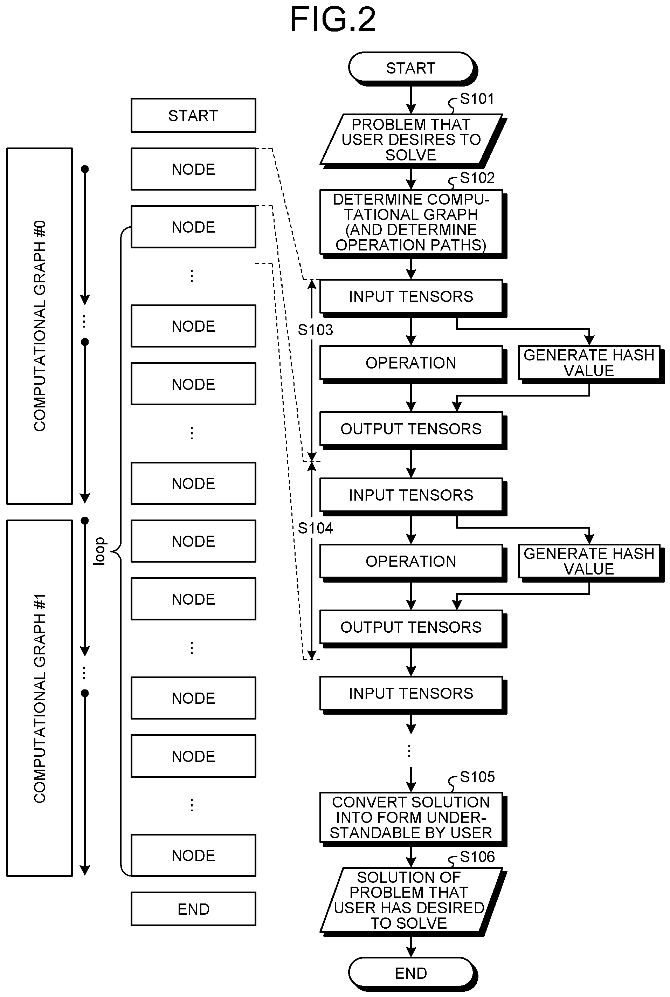

Next, a flow to be used by a user to train a computational model using the information processing apparatus 100 is described. FIG. 2 is a flowchart illustrating the flow of a usage scene for the user according to the first embodiment. As illustrated in FIG. 2, when information on a problem in that the user desires to solve is input to the information processing apparatus 100 (S101), the information processing apparatus 100 uses a general machine learning algorithm to determine a computational graph and operation paths based on the input information (S102).

Subsequently, the information processing apparatus 100 executes arithmetic processing at each node (from S103 to S104). Specifically, using information on input tensors, the information processing apparatus 100 executes arithmetic processing set at the node and generates a hash value at the same time, and then outputs an operation result and the hash value together as an output tensor to the next node.

Thereafter, when the structure of the computational model is finalized upon completion of learning, the information processing apparatus 100 converts the solution into a form understandable by the user (S105), and the information processing apparatus 100 outputs, to a device such as a display, a storage unit, or a user terminal, the solution to the problem that the user has desired to solve (S106).

Functional Configuration of Information Processing Apparatus 100

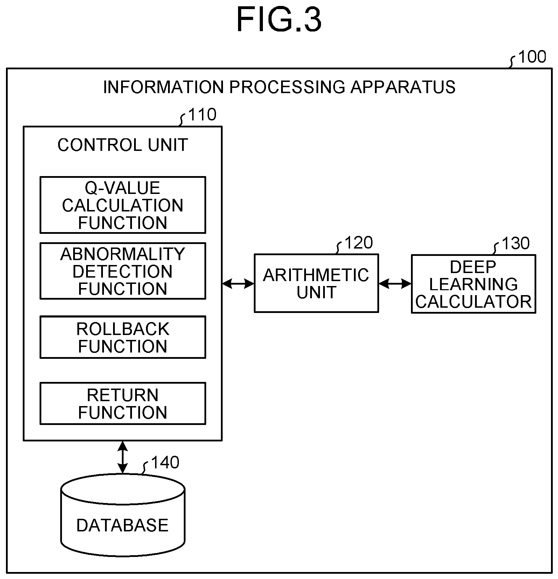

FIG. 3 is a block diagram illustrating the functional configuration of the information processing apparatus 100 according to the first embodiment. As illustrated in FIG. 3, the information processing apparatus 100 includes a control unit 110, an arithmetic unit 120, a deep learning calculator 130, and a database 140.

The control unit 110 is a processing unit that controls the entirety of the information processing apparatus 100 and is, for example, a processor. The control unit 110 is equipped with a Q-value calculation function, an abnormality detection function, a rollback function, and a return function. Each of these functions is an example of an electronic circuit included in a processor or an example of a process that a processor executes.

The control unit 110 detects, in deep learning, a sign of a failure in learning in an operation that is performed with a lower number of bits than FP32 operations. The control unit 110 then rolls back to an operation where the sign of a failure in learning has been detected, and instructs the arithmetic unit 120 and the deep learning calculator 130 to perform recalculations using FP32 operations. The control unit 110 then determines whether returning from FP32 operations to operations with a lower number of bits, such as DL-INT operations or the QINT operations is allowed, and, when the returning is allowed, instructs the arithmetic unit 120 and the deep learning calculator 130 to switch to operations with a lower number of bits.

The processing of detecting a sign of a failure in learning includes the processing of detecting the sign when the Q-value difference between input tensors is out of an allowable range or when the range of the variation of the Q-values between output tensors is greater than or equal to a certain threshold. The processing of detecting a sign of a failure in learning includes the processing of determining whether sampled values to be used for calculating a Q-value are all zeros, and, when the sampled values are all zeros, detecting the sign based on past Q-values. The processing of detecting a sign of a failure in learning includes the processing of detecting the sign when the number of elements undergoing overflows or underflows is greater than or equal to a certain threshold relative to the number of elements to be sampled.

The arithmetic unit 120 is a processing unit that executes, for example, preprocessing of operations for machine learning, and memory control related to the preprocessing. For example, in the case of pre-learning, the arithmetic unit 120 outputs an operation type and an operation parameter for each computation node to the deep learning calculator 130, and requests the deep learning calculator 130 to perform 32-bit floating-point operations.

For example, in the case of main learning, the arithmetic unit 120 identifies a decimal-point position in an operation in accordance with the statistical information. Thereafter, the arithmetic unit 120 outputs an operation type, an operation parameter, and a decimal-point position for each computation node to the deep learning calculator 130, and requests the deep learning calculator 130 to perform fixed-point operations such as DL-INT operations.

The deep learning calculator 130 is an accelerator that serves for operations of various types at computation nodes and, more specifically, refers to a graphics processing unit (GPU) or a tensor processing unit (TPU). When the information processing apparatus 100 includes no accelerator, a central processing unit (CPU) of a host serves for operations. In this case, the information processing apparatus 100 does not need to include the deep learning calculator 130.

For example, when being instructed to conduct pre-learning, the deep learning calculator 130 executes 32-bit floating-point operations using notified operation types and operation parameters for corresponding computation nodes, and outputs operation results. When being instructed to conduct main learning, the deep learning calculator 130 uses notified operation types and operation parameters for corresponding computation nodes to execute fixed-point operations, such as DL-INT operations, with notified decimal-point positions, and outputs operation results. The deep learning calculator 130 may be, for example, a processing unit that is executed by an artificial intelligence (AI) processor dedicated to deep learning (a deep learning unit (DLU)), and may be an example of an electronic circuit included in a DLU or an example of a process that is executed by a DLU.

The database 140 is an example of a storage apparatus that stores therein data of various kinds and a computer program that is executed by the control unit 110. The database 140 is, for example, a memory or a hard disk.

Details of Functions of Information Processing Apparatus 100

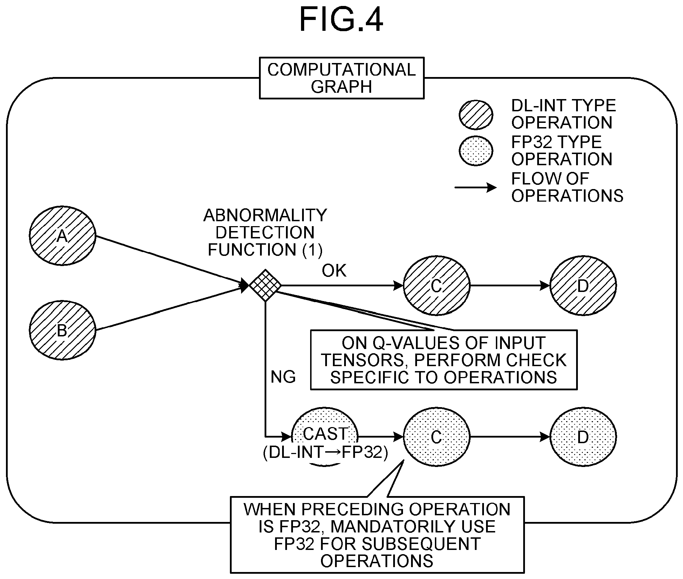

Next, details of the functions of the information processing apparatus 100 according to the first embodiment are described using FIGS. 4 to 12. In the description of the first embodiment, DL-INT operations are used as an example of low-bit operations in deep learning. However, QINT operations may be used instead. An arithmetic device is applicable either to a CPU or an accelerator. However, the following descriptions assume that the arithmetic device is applied to a CPU.

In the first embodiment directed to enhancing calculation efficiency in deep learning, deep learning is implemented roughly in the following three steps. The three steps are: (1) detecting a sign of a failure in learning in DL-INT operations; (2) rolling back to an operation where an abnormality has been detected, and performing recalculations using FP32 operations; and (3) switching to DL-INT operations when returning from FP32 operations to DL-INT operations is allowed.

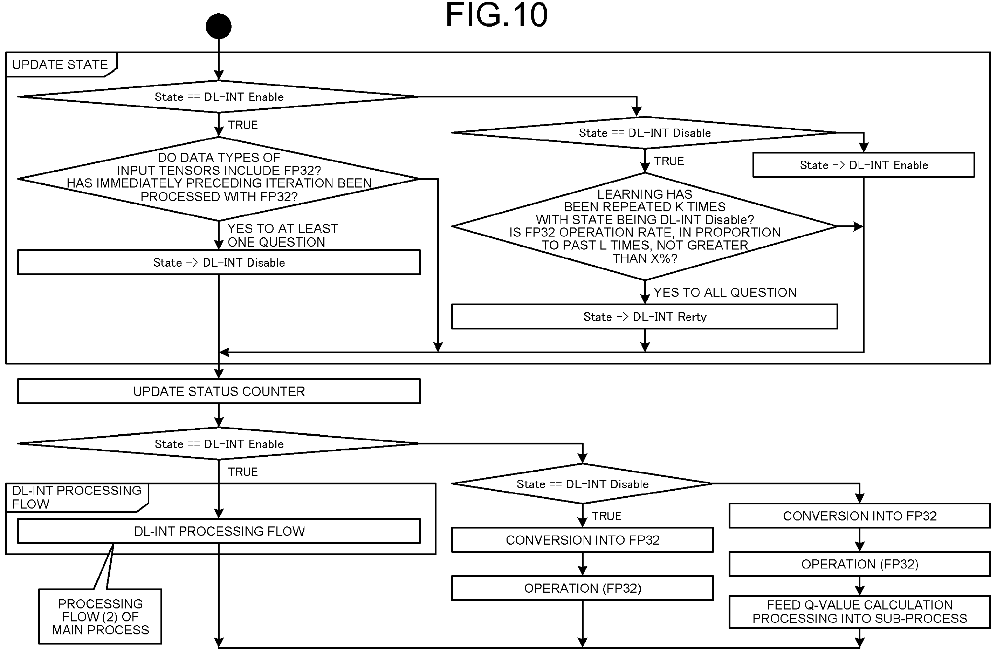

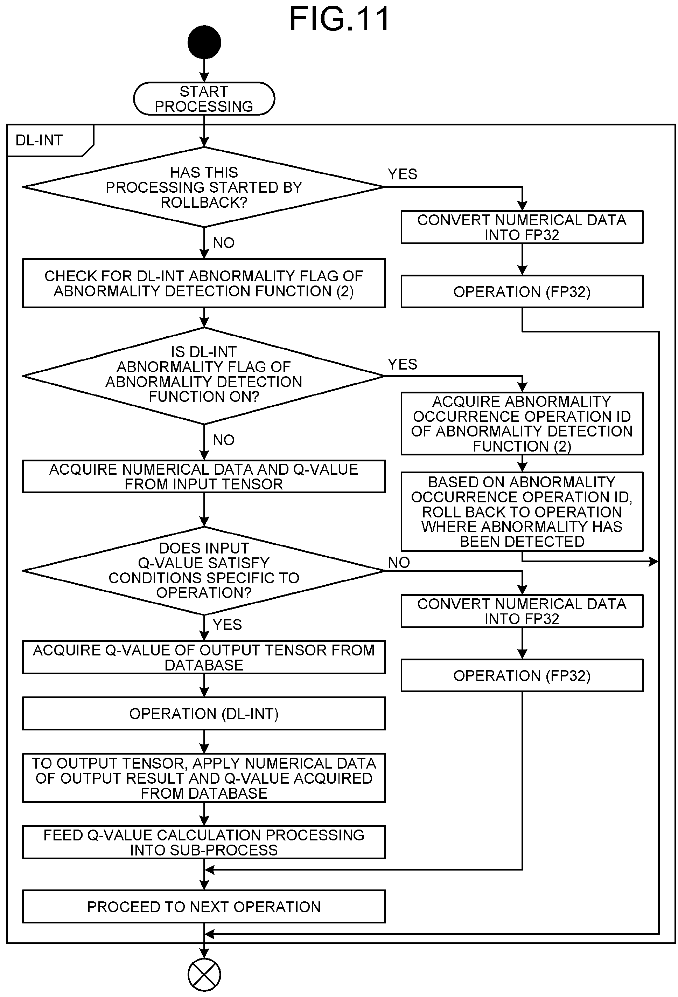

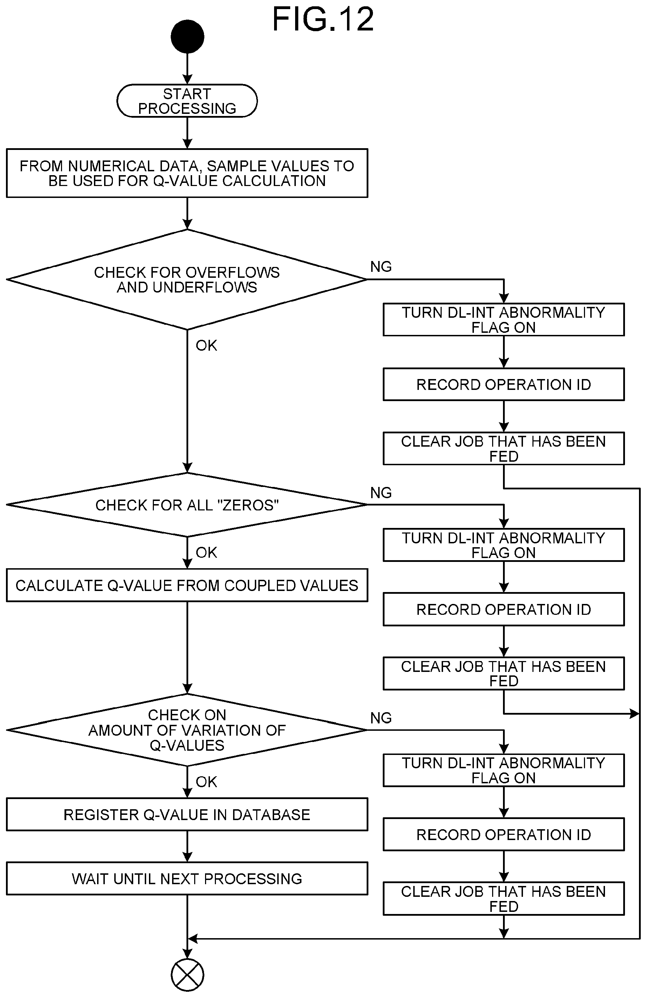

In deep learning according to the first embodiment, machine learning with DL-INT operations progresses in two separated processes: a main process and a sub-process. The purpose for this is to have arithmetic operations performed in a concentrated manner in the main process while having abnormality detection processing in DL-INT operations and calculation of Q-values performed in the sub-process. In the information processing apparatus 100, the above three steps are asynchronously processed in these two processes. The processing flow of the main process is illustrated in FIGS. 10 and 11, and the processing flow of the sub-process is illustrated in FIG. 12. These processes are described down below.

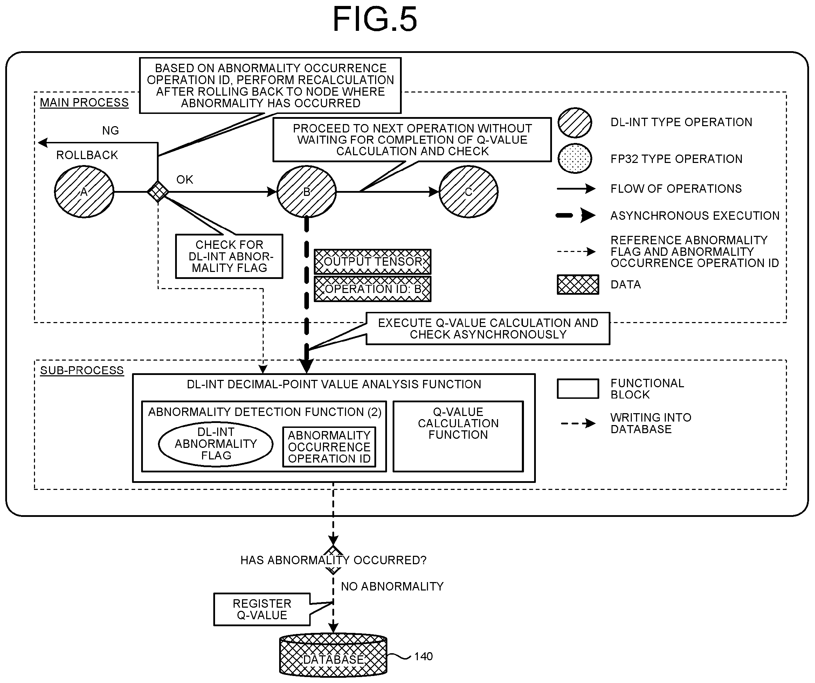

Next, a method for detecting a sign of a failure in learning in low-bit operations in deep learning is specifically described using FIGS. 4 and 5. There are four patterns for a sign of a failure in learning in low-bit operations in deep learning, and an abnormality can be detected in each of the patterns using the following four parameters in the first embodiment. The four parameters are: (1) the Q-value difference between input tensors; (2) the range of the variation of Q-values between output tensors; (3) sampled values to be used for calculating Q-values; and (4) the number of elements undergoing overflows or underflows, relative to the number of elements to be sampled.

Abnormality Detection Method Using Q-Value Difference between Input Tensors

Q-values are different from tensor to tensor, and, for example, Q-values of input tensors may differ between operations that receive a plurality of input items such as Add, Sub, and Sum. A Q-value represents a decimal-point position, and allowable differences of input Q-values differ among different fixed-point operations. For this reason, the condition for an allowable input Q-value is defined with respect to each operation, and the information processing apparatus 100 determines, before the start of an operation, whether an input Q-value satisfies the condition. The default value of the condition may be set to a generic value that is changeable by a user later.

Here, abnormality detection using the Q-value difference between input tensors is described using a specific example. For example, provided that the allowable range of the Q-value difference for Add has been set to 2, when $(Q_X, Q_Y) = (2, 1)$ in an operation $Z = X + Y$, the Q-value difference is within the allowable range. The information processing apparatus 100 therefore determines that the operation is normal. In contrast, when $(Q_X, Q_Y) = (2, 5)$, the Q-value difference is out of the allowable range, the information processing apparatus 100 thus detects an abnormality.

Likewise, provided that the allowance error of the Q-value difference for Convolution has been set to 2, when $(Q_X, Q_w) = (3, 4)$ in an operation $Y = Conv (X, Weight)$, the Q-value difference is within the allowable range. The information processing apparatus 100 therefore determines that the operation is normal. In contrast, when $(Q_X, Q_w) = (1, 4)$, the Q-value difference is out of the allowable range, the information processing apparatus 100 thus detects an abnormality.

Next, processing to be executed when an abnormality has been detected in the Q-value difference between input tensors is described. FIG. 4 is a view illustrating an example of an abnormality detection method according to the first embodiment. The example of FIG. 4 represents a computational graph that includes operations A to D. For example, as illustrated in FIG. 4, when the abnormality detection function has detected an abnormality in the operation A or B that is a DL-INT operation (an NG route), the information processing apparatus 100 inserts an operation (Cast) for switching to FP32 operations and executes the operations C and D as FP32 operations. In contrast, when the abnormality detection function has not detected an abnormality (an OK route), the information processing apparatus 100 continues to execute the operations C and D as DL-INT operations.

Such determination by the abnormality detection function as to whether operations are executed as DL-INT operations or are switched to and executed as FP32 operations is made by identifying respective data types of input tensors of individual operations. This determination corresponds to, for example, determination "DO DATA TYPES OF INPUT TENSORS INCLUDE FP32?" in the main process illustrated in FIG. 10.

When an abnormality has been detected in an operation, not only the operation but also the operations subsequent thereto are switched to FP32 operations because an abnormality is highly likely to occur in operations that follow an operation where an abnormality has occurred. Thus, calculation is mandatorily performed using FP32 operations in a case where the data type of an input tensor is FP32, whereby the information processing apparatus 100 can deliver information that an abnormality has occurred in a preceding operation to the operations subsequent thereto.

Abnormality Detection Method Using Range of Variation of Q-values between Output Tensors

Next, an abnormality detection method using the range of the variation of Q-values between output tensors is described. Eight-bit learning is based on the premise that the variation of calculated numerical values between an iteration and the next is increasingly smaller; therefore, having a large range of the variation of Q-values between an iteration and the next contradicts this premise. In detection of an abnormality, an inequality expressed as $|Q - Q_{avg}| < T$ is used. When this inequality does not hold, the information processing apparatus 100 determines that an abnormality has been detected. In this inequality, "Q" represents the Q-value of an output tensor, "$Q_{avg}$" represents the average of the Q-values of output tensors for the past N iterations, and "T" represents a threshold. The default values of N, the number of past iterations, and T, the threshold, may be set to generic values that are changeable by the user later.

Next, processing to be executed when an abnormality has been detected in the range of the variation of Q-values between output tensors is described. FIG. 5 is a view illustrating another example of the abnormality detection method according to the first embodiment. In the example of FIG. 5, operations A, B, and C are executed in order as DL-INT operations. For example, before executing the operation B, the information processing apparatus 100 checks for a DL-INT abnormality flag, thereby determining whether an abnormality has occurred in operations before the operation B. This determination corresponds to, for example, the determination "IS DL-INT ABNORMALITY FLAG OF ABNORMALITY DETECTION FUNCTION ON?" in the main process illustrated in FIG. 11.

Upon detecting an abnormality from the DL-INT abnormality flag, the information processing apparatus 100 rolls back, based on an abnormality occurrence operation identification (ID), to the operation where an abnormality has occurred, and performs a recalculation using an FP32 operation.

A more specific description is given of rollback processing. For example, the information processing apparatus 100 records, in the database 140, a unique ID (operation ID) of an operation where an abnormality has occurred in abnormality detection in an abnormality detection method illustrated in FIG. 5. Upon recognizing that a DL-INT abnormality flag is on, the information processing apparatus 100 determines, based on the operation ID, which operation to roll back to.

The information processing apparatus 100 then resumes processing using FP32 operations after the rolling back. The resumption of the processing corresponds to, for example, the route labeled "Yes" for "HAS THIS PROCESSING STARTED BY ROLLBACK?" in the main process illustrated in FIG. 11. As in the case of the abnormality detection method using the Q-value difference between input tensors, the information processing apparatus 100 executes, as FP32 operations, operations after the rolling back. Determination as to whether to roll back and execute operations as FP32 operations corresponds to, for example, the determination "DO DATA TYPES OF INPUT TENSORS INCLUDE FP32?" in the main process illustrated in FIG. 10 as in the case of the abnormality detection method using the Q-value difference between input tensors.

In contrast, when an abnormality has not been detected from the DL-INT abnormality flag, the information processing apparatus 100 continues to execute the operation B as a DL-INT operation. After executing the operation B, as illustrated in FIG. 5, the information processing apparatus 100 calculates a new Q-value from obtained numerical data and a used Q-value and feeds, into the sub-process, a JOB of performing CHECK. In this case, the used Q-value is, for example, a Q-value of the immediately preceding intention of the current intention. This feeding into the sub-process corresponds to, for example, "FEED Q-VALUE CALCULATION PROCESSING INTO SUB-PROCESS" in the main process illustrated in FIG. 11. In the main process that is executed by the information processing apparatus 100, the operation B is executed without waiting for the completion of the processing in the sub-process.

In the sub-process that is executed by the information processing apparatus 100, the JOB fed from the main process is processed. The sub-process starts processing after the output numerical data is obtained upon completion of the operation for the operation B. In the sub-process, the information processing apparatus 100 receives an operation result and an operation ID from the main process. Subsequently, through sampling of output numerical data received as the operation result, the information processing apparatus 100 randomly extracts elements to be used for Q-value calculation. This sampling corresponds to, for example, "FROM NUMERICAL DATA, SAMPLE VALUES TO BE USED FOR Q-VALUE CALCULATION" in the sub-process illustrated in FIG. 12.

Subsequently, the information processing apparatus 100 performs CHECK processing on the obtained numerical data and Q-value. This CHECK processing corresponds to "CHECK ON AMOUNT OF VARIATION OF Q-VALUES" in the sub-process illustrated in FIG. 12. At the same time, the information processing apparatus 100 calculates $Q_{avg}$ from past Q-values registered in the database 140. Thereafter, upon detecting an abnormality, the information processing apparatus 100 turns the DL-INT abnormality flag on and records a corresponding operation ID. When there is any JOB that has been fed into the sub-process, rolling back makes this JOB unnecessary and the fed JOB is therefore cleared. In contrast, when an abnormality has not been detected, the information processing apparatus 100 registers a corresponding Q-value in the database 140. This registration processing corresponds to "REGISTER Q-VALUE IN DATABASE" in the sub-process illustrated in FIG. 12.

Abnormality Detection Method using Sampled Values to Be Used for Calculating Q-value

Next, an abnormality detection method using sampled values to be used for calculating a Q-value is described. The information processing apparatus 100 uses output numerical data for Q-value calculation; however, in an actual operation, the calculation cost is high when all values in the data are used for calculation. The information processing apparatus 100 therefore calculates a Q-value from sampled numerical data.

In this calculation, as described above, the value "0" is treated as an irregular value and is not used in Q-value calculation. Thus, when the sampled numerical values are all "0" (All zeros), the corresponding Q-value is also set to an irregular value. When using such an irregular Q-value, it is not allowed to obtain actual values from 8-bit numerical data. In this calculation, the information processing apparatus 100 discriminates between a case where the "All-zeros" situation has coincidentally occurred by the sampling and a case where the "All-zeros" situation has inevitably occurred by an operation. When the "All-zeros" situation has inevitably occurred by an operation, the use of the irregular Q-value is allowed.

Herein, examples where the "All-zeros" situation occurs are described through specific examples. For example, as an example where the "All-zeros" situation inevitably occurs, in a calculation of the inner product of two vectors, one of which is a zero-vector, produces 0 as an output as illustrated in expression (1) below.

$$[0 \quad \ldots \quad 0] \times \begin{bmatrix} 1 \\ \vdots \\ 1 \end{bmatrix} = [0] \tag{1}$$

As an example where the "All-zeros" situation coincidentally occurs, a matrix operation of an input tensor and a weight may result in 0 as illustrated in expression (2) below.

$$\begin{bmatrix} 1 & 1 \\ 1 & 1 \end{bmatrix} \times \begin{bmatrix} -1 \\ 1 \end{bmatrix} = [0 \quad 0] \tag{2}$$

In order to discriminate between such two cases where the "All-zeros" situation occurs, the information processing apparatus 100 calculates $Q_{avg}$ from the past Q-values upon occurrence of the "All-zeros" situation, and determines whether $Q_{avg}$ is also an irregular value. When $Q_{avg}$ is not an irregular value, the information processing apparatus 100 determines the case to be an abnormal case and turns the DL-INT abnormality flag on.

Processing in a case where an abnormality has been detected in sampled values to be used for calculating a Q-value is the same as the above-described processing in a case where an abnormality has been detected in the range of the variation of Q-values between output tensors. CHECK processing according to the abnormality detection method using sampled values to be used for calculating a Q-value corresponds to, for example, "CHECK FOR ALL "ZEROS"" in the sub-process illustrated in FIG. 12.

Abnormality Detection Method Using Number of Elements Undergoing Overflows or Underflows

Next, an abnormality detection method using the number of elements undergoing overflows or underflows is described. In DL-INT operations, when the number of bits in the integer part is n while the number of bits in the decimal part is m, the range of values that can be expressed is from $-(2^{n-1})$ to $2^{n-1}-2^{-m}$, where $n + m + 1 = 8$. When the output obtained by an operation is out of this range, an overflow or underflow occurs. Continuation of learning does not cause a problem when the number of elements undergoing overflows or underflows is low. However, learning fails when the proportion of the number of elements undergoing overflows or underflows is high. Thus, the information processing apparatus 100 determines whether the proportion of the number of elements undergoing overflows or underflows is not greater than a certain value.

A description is now given, through a specific example, of determination as to whether the proportion of the number of elements undergoing overflows or underflows is not greater than the certain value. Suppose, for example, the number of elements to be sampled is 256, the number of elements undergoing overflows or underflows is n, and a threshold is set to not greater than 5%. The information processing apparatus 100 detects, as an abnormality, when n/256 is not less than 5%, and determines the operation to be normal when n/256 is less than 5%. Upon detecting an abnormality, the information processing apparatus 100 turns the DL-INT abnormality flag on.

Processing in a case where an abnormality has been detected in the number of elements undergoing overflows or underflows is the same as the above-described processing in a case where an abnormality has been detected in the range of the variation of Q-values between output tensors. CHECK processing according to the abnormality detection method using the number of elements undergoing overflows or underflows corresponds to, for example, "CHECK FOR OVERFLOWS AND UNDERFLOWS" in the sub-process illustrated in FIG. 12.

Return Processing

Next, return processing after the abnormality detection is described. The processing performance stays low when operations are kept being executed as FP32 operations after the detection of an abnormality. For this reason, when the abnormality has been resolved whereby returning to the DL-INT operation is allowed, the information processing apparatus 100 switches from FP32 operations to DL-INT operations to recover high performance.

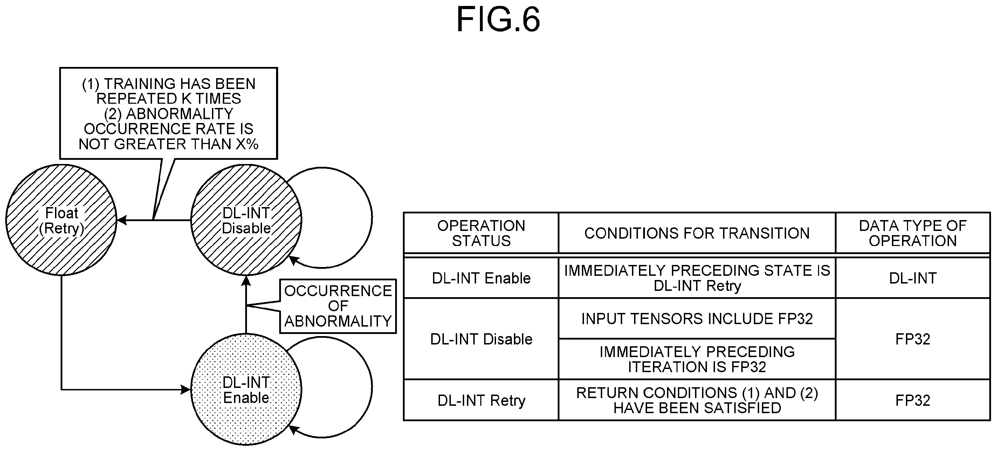

FIG. 6 is a view illustrating an example of the return processing performed after abnormality avoiding processing according to the first embodiment. FIG. 6 illustrates operation statuses that indicate the state of an operation and transition therebetween, conditions for transition to the individual operation statuses, and the data type of an operation when the operation takes each of the operation statuses as the state thereof.

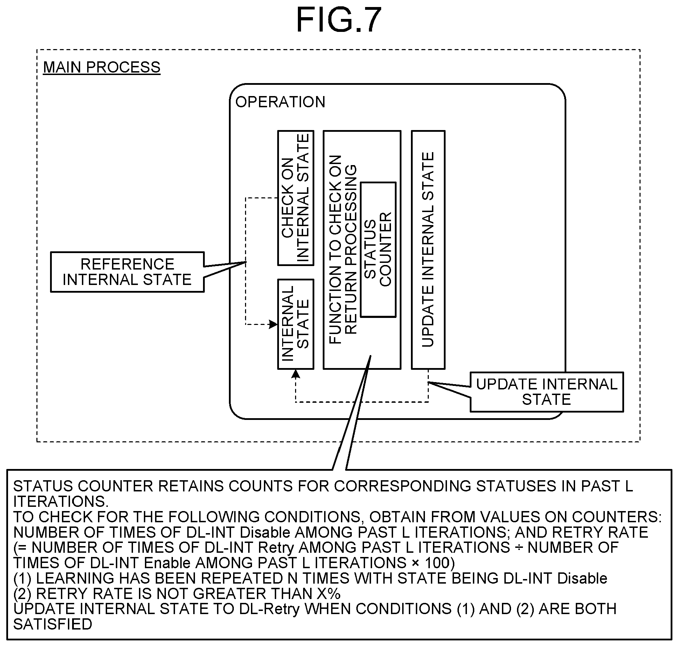

FIG. 7 is a view illustrating an example of functional blocks in the return processing according to the first embodiment. AS illustrated in FIG. 7, for operations such as DL-INT operations and FP32 operations, the information processing apparatus 100 retains respective internal states, which each correspond to any one of the operation statuses, and a status counter that counts each of the states.

With the state being DL-INT Enable, the information processing apparatus 100 checks on the data type of the immediately preceding iteration, and, when the data type of the operation is FP32, changes the state to DL-INT Disable. The information processing apparatus 100 changes the state to DL-INT Disable also when input tensors include FP32. With the state being DL-INT Disable, the information processing apparatus 100 checks for return conditions, thereby attempting to return to DL-INT operations. The return conditions are, for example, (1) training has been repeated K times with the state being DL-INT Disable, and (2) a retry rate is not greater than a certain threshold X% in proportion to the past L iterations. The retry rate may be an abnormality occurrence rate.

The respective default values of the values L, K, and X may be set to generic values that are changeable by the user later. The retry rate can be calculated using, for example, a formula expressed as the retry rate = the number of times of DL-INT Retry among the past L iterations/the number of times of DL-INT Enable among the past L iterations $\times$ 100. The information processing apparatus 100 can record the number of times of DL-INT Enable, the number of times of DL-INT Disable, and the number of times of DL-INT Retry among the past L iterations into the status counter, and acquire the respective values thereof from the status counter.

The information processing apparatus 100 then changes the state from DL-INT Disable to DL-INT Enable when the above-described return conditions (1) and (2) are satisfied. Updating this state corresponds to, for example, "UPDATE STATUS COUNTER" in the main process illustrated in FIG. 10.

The return condition (1) is effective, for example, when inadequate pre-learning is the cause of a failure in learning. Through further repeating training with the state being DL-INT Disable, the characteristics of having an increasingly smaller variation between calculated numerical values between an iteration and the next and an increasingly narrower distribution of values that a tensor has are kept. Therefore, training is expected to normally progress after the return. The return condition (2) is effective when operations are potentially unstable. Depending on the structure of the computational graph, some operations are unstable when switching to DL-INT operations. Therefore, an operation that has a high abnormality occurrence rate may be continued to be an FP32 operation without returning to a DL-INT operation.

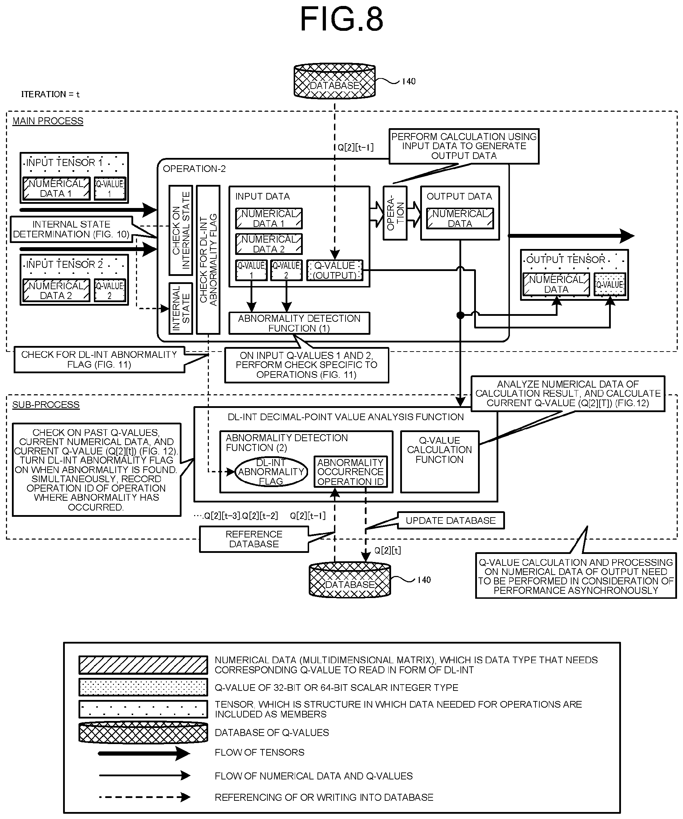

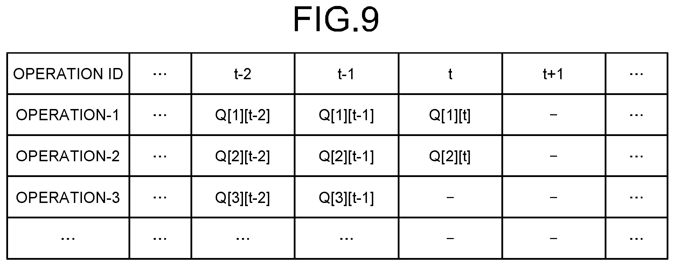

The flow of a series of data with the state being DL-INT Enable during normal operation is described. FIG. 8 is a view illustrating an example of a data flow during normal operation according to the first embodiment. FIG. 9 is a view illustrating an example of Q-values according to the first embodiment. FIG. 8 is an example where the operation ID = 2, and two inputs and one output are assumed for an operation-2. Q[i][t] in the database 140 indicates a Q-value that corresponds to the operation ID = i and the iteration = t. Q[2][t-1] illustrated in the example of FIG. 9 is the Q-value referenced in FIG. 8 with Q[2][t] updated. Each numerical data is a multidimensional matrix.

EP 4 109 352 B1

Advantageous Effects

As described above, the information processing program causes the information processing apparatus 100 to perform processing of: detecting, in deep learning, a sign of a failure in learning in operations that are performed with a lower number of bits compared with operations that are performed with a certain number of bits, such as FP32 operations; rolling back to an operation where the sign of a failure in learning has been detected and performing a recalculation by an operation with the certain number of bits; determining whether returning from operations with the certain number of bits to operations with the lower number of bits is allowed; and, when the returning to the operations with the lower number of bits is allowed, switching to operations with the lower number of bits.

Consequently, the information processing apparatus 100 can minimize processing for recalculations by detecting a sign of a failure in learning as an abnormality and rolling back before a failure in machine learning becomes apparent in the form of, for example, no decrease in lost value or obtainment of a not-a-number (NaN) value. Moreover, the information processing apparatus 100 enables a higher calculation speed, improved power performance, and memory resource saving in deep learning by returning from the operations with the certain number of bits to the operations with the lower number of bits. Thus, the information processing apparatus 100 can enhance calculation efficiency in deep learning.

The processing of switching to the operations with the lower number of bits includes processing of switching to DL-INT operations or QINT operations.

Consequently, the information processing apparatus 100 can enhance performance in deep learning.

The processing of detecting a sign of a failure in learning includes the processing of detecting the sign when the Q-value difference between input tensors is out of an allowable range.

Consequently, the information processing apparatus 100 can detect the sign of a failure in learning as an abnormal value and thereby can enhance calculation efficiency in deep learning.

The processing of detecting a sign of a failure in learning includes the processing of detecting the sign when a range of variation of Q-values between output tensors is greater than or equal to a certain threshold.

Consequently, the information processing apparatus 100 can detect the sign of a failure in learning as an abnormal value and thereby can enhance calculation efficiency in deep learning.

The processing of detecting a sign of a failure in learning includes the processing of determining whether sampled values to be used for calculating a Q-value are all zeros, and, when the sampled values are all zeros, detecting the sign based on past Q-values.

Consequently, the information processing apparatus 100 can detect the sign of a failure in learning as an abnormal value and thereby can enhance calculation efficiency in deep learning.

The processing of detecting a sign of a failure in learning includes the processing of detecting the sign when the number of elements undergoing overflows or underflows is greater than or equal to a certain threshold relative to the number of elements to be sampled.

Consequently, the information processing apparatus 100 can detect the sign of a failure in learning as an abnormal value and thereby can enhance calculation efficiency in deep learning.

The processing of determining whether the returning is allowed includes processing of repeating, a first certain number of times, training by the operations with the certain number of bits and, when an abnormality occurrence rate is not greater than a second certain number of times, determining that the returning to the operations with the lower number of bits is allowed.

Consequently, in deep learning, the information processing apparatus 100 can enhance performance while normally conducting training.

System

The processing procedures, the control procedures, the specific names, and the information including various data and parameters described above or illustrated in the drawings can be changed as desired, unless otherwise stated. The specific examples, the distributions, the numerical values described in the embodiment are merely examples and can be changed as desired.

The constituent elements of each of the illustrated apparatuses are functionally conceptual and do not need to be physically configured as illustrated in the drawings. That is, the specific form of each of the apparatuses in terms of distribution and integration is not limited to the illustrated form. That is, the whole or parts of the apparatus can be configured in a functionally or physically distributed or integrated form in any desired units in accordance with various loads, usage conditions, or the like.

Furthermore, the whole or parts of each of the processing functions that are executed in each of the apparatuses can be implemented by a CPU and a computer program that is analyzed and executed by the CPU, or can be implemented as hardware using wired logics.

Hardware

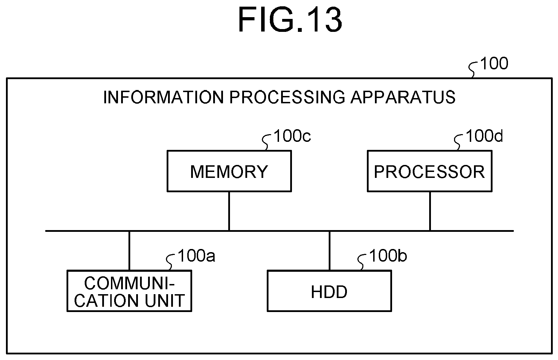

The hardware configuration of the information processing apparatus 100 described above is described. FIG. 13 is a diagram illustrating a hardware configuration example. As illustrated in FIG. 13, the information processing apparatus 100 includes, a communication unit 100a, a hard disk drive (HDD) 100b, a memory 100c, and a processor 100d. The components illustrated in FIG. 13 are connected to one another via a bus or the like.

The communication unit 100a is a network interface card or the like and communicates with another server. The HDD 100b stores therein a computer program that runs the functions illustrated in FIG. 3 and a database.

The processor 100d reads out, from the HDD 100b or the like, a computer program that executes the same processing as the processing to be executed by the respective processing units illustrated in FIG. 3 and deploys the computer program onto the memory 100c, thereby running a process by which the respective functions described using FIG. 3 are executed. For example, this process executes the same functions as those to be executed by the respective processing units included in the information processing apparatus 100. Specifically, for example, the processor 100d reads out, from the HDD 100b or the like, a computer program having the same functions as those that the respective processing units illustrated in FIG. 3 have. The processor 100d then executes a process by which the same processing as the processing to be executed by the processing units illustrated in FIG. 3.

Thus, the information processing apparatus 100 reads out and executes a computer program, thereby being run as an information processing apparatus that executes individual parts of processing. Furthermore, the information processing apparatus 100 is also capable of implementing the same functions as in the above-described embodiment by reading out the above computer program from a recording medium by use of a medium reading apparatus and executing the read computer program. A computer program described in another embodiment is not limited to being executed by the information processing apparatus 100. For example, the present invention can be applied to a case where another computer or server executes a computer program or a case where those computer and server work together to execute a computer program.

This computer program can be distributed via a network such as the Internet. Furthermore, this computer program can be executed by being recorded on a computer-readable recording medium such as a hard disk, a flexible disk (FD), a compact disc read-only memory (CD-ROM), a magneto-optical disk (MO), or a digital versatile disc (DVD) and being read out from the recording medium by a computer.

[b] Second Embodiment

While an embodiment of the present invention is described above, the present invention may be implemented in various forms other than the above-described embodiment.

In one aspect, calculation efficiency in deep learning is enhanced.

**Claims**

1. A computer-readable recording medium having stored therein a program that causes a computer (100) to execute a process comprising:

   detecting, in deep learning, a sign of a failure in learning in fixed-point operations that are performed, using information on input tensors, to output an output tensor and performed with a lower number of bits compared with operations that are performed with a certain number of bits, based on a Q-value of each of the input tensors or a Q-value of the output tensor wherein the Q-value is a value determined based on a distribution of respective decimal point positions of elements of a tensor;
   rolling back to an operation where the sign is detected and performing a recalculation by an operation with the certain number of bits;
   determining whether returning from operations with the certain number of bits to operations with the lower number of bits is allowed; and
   when the returning to operations with the lower number of bits is allowed, switching to operations with the lower number of bits.

2. The computer-readable recording medium according to claim 1, wherein the switching to operations with the lower number of bits comprises switching to Deep Learning Integer operations or Quantized Integer operations.

3. The computer-readable recording medium according to claim 1 or 2, wherein the detecting the sign comprises detecting the sign when a difference between Q-values of the input tensors is out of an allowable range.

4. The computer-readable recording medium according to claim 1 or 2, wherein the detecting the sign comprises detecting the sign when a range of variation between a Q-value of the output tensor and an average of Q-values of output tensors for past iterations is greater than or equal to a certain threshold.

5. The computer-readable recording medium according to claim 1 or 2, wherein the detecting the sign comprises:

determining whether sampled values to be used for calculating a Q-value are all zeros, and
based on past Q-values, detecting the sign when the sampled values are all zeros.

6. The computer-readable recording medium according to claim 1 or 2, wherein the detecting the sign comprises detecting the sign when number of elements of the output tensor undergoing overflows or underflows is greater than or equal to a certain threshold relative to number of elements to be sampled.

7. The computer-readable recording medium according to claim 1, wherein the determining whether the returning is allowed comprises repeating, a first certain number of times, training by operations with the certain number of bits and, when an abnormality occurrence rate is not greater than a second certain number of times, determining that the returning to operations with the lower number of bits is allowed.

8. An information processing method executed by a computer (100), the method comprising:

detecting, in deep learning, a sign of a failure in learning in fixed-point operations that are performed, using information on input tensors, to output an output tensor and performed with a lower number of bits compared with operations that are performed with a certain number of bits, based on a Q-value of each of the input tensors or a Q-value of the output tensor wherein the Q-value is a value determined based on a distribution of respective decimal point positions of elements of a tensor;
rolling back, to an operation where the sign is detected and performing, a recalculation by an operation with the certain number of bits;
determining, whether returning from operations with the certain number of bits to operations with the lower number of bits is allowed; and
when the returning to operations with the lower number of bits is allowed, switching, to operations with the lower number of bits.

9. An information processing apparatus (100) comprising a controller (110) configured to execute a process comprising:

detecting, in deep learning, a sign of a failure in learning in fixed-point operations that are performed, using information on input tensors, to output an output tensor and performed with a lower number of bits compared with operations that are performed with a certain number of bits, based on a Q-value of each of the input tensors or a Q-value of the output tensor wherein the Q-value is a value determined based on a distribution of respective decimal point positions of elements of a tensor;
rolling back to an operation where the sign is detected and performing a recalculation by an operation with the certain number of bits;
determining whether returning from operations with the certain number of bits to operations with the lower number of bits is allowed; and
when the returning to operations with the lower number of bits is allowed, switching to operations with the lower number of bits.

10. The information processing apparatus (100) according to claim 9, wherein the switching to operations with the lower number of bits comprises switching to Deep Learning Integer operations or Quantized Integer operations.

11. The information processing apparatus (100) according to claim 9 or 10, wherein the detecting the sign comprises detecting the sign when a difference between Q-values of the input tensors is out of an allowable range.

12. The information processing apparatus (100) according to claim 9 or 10, wherein the detecting the sign comprises detecting the sign when a range of variation between a Q-value of the output tensor and an average of Q-values of output tensors for past iterations is greater than or equal to a certain threshold.

13. The information processing apparatus (100) according to claim 9 or 10, wherein the detecting the sign comprises:

determining whether sampled values to be used for calculating a Q-value are all zeros, and
based on past Q-values, detecting the sign when the sampled values are all zeros.

14. The information processing apparatus (100) according to claim 9 or 10, wherein the detecting the sign comprises detecting the sign when number of elements of the output tensor undergoing overflows or underflows is greater than or equal to a certain threshold relative to number of elements to be sampled.

15. The information processing apparatus (100) according to claim 9, wherein the determining whether the returning is allowed comprises repeating, a first certain number of times, training by operations with the certain number of bits and, when an abnormality occurrence rate is not greater than a second certain number of times, determining that the returning to operations with the lower number of bits is allowed.


**Patentansprüche**

1. Computerlesbares Aufzeichnungsmedium mit einem darin gespeicherten Programm, das veranlasst, dass ein Computer (100) einen Prozess ausführt, umfassend:

   Erfassen, in Deep Learning, eines Zeichens eines Ausfalls beim Erlernen von Festkommavorgängen, die durchgeführt werden unter Verwendung von Informationen über Eingabetensoren, um einen Ausgabetensor auszugeben, und mit einer geringeren Anzahl von Bits durchgeführt werden, verglichen mit Vorgängen, die mit einer gewissen Anzahl von Bits durchgeführt werden, basierend auf einem Q-Wert jedes der Eingabetensoren oder einem Q-Wert des Ausgabetensors, wobei der Q-Wert ein Wert ist, der basierend auf einer Verteilung jeweiliger Dezimalpunktpositionen von Elementen eines Tensors bestimmt wird;
   Zurücksetzen zu einem Vorgang, bei dem das Zeichen erfasst wird, und Durchführen einer erneuten Berechnung durch einen Vorgang mit der gewissen Anzahl von Bits;
   Bestimmen, ob Zurückkehren von Vorgängen mit der gewissen Anzahl von Bits zu Vorgängen mit der geringeren Anzahl von Bits erlaubt ist; und
   wenn das Zurückkehren zu Vorgängen mit der geringeren Anzahl von Bits erlaubt ist, Umschalten zu Vorgängen mit der geringeren Anzahl von Bits.

2. Computerlesbares Aufzeichnungsmedium nach Anspruch 1, wobei das Umschalten zu Vorgängen mit der geringeren Anzahl von Bits Umschalten zu Deep Learning-Ganzzahlvorgängen oder quantisierten Ganzzahlvorgängen umfasst.

3. Computerlesbares Aufzeichnungsmedium nach Anspruch 1 oder 2, wobei das Erfassen des Zeichens Erfassen des Zeichens umfasst, wenn eine Differenz zwischen Q-Werten der Eingabetensoren außerhalb eines erlaubten Bereichs liegt.

4. Computerlesbares Aufzeichnungsmedium nach Anspruch 1 oder 2, wobei das Erfassen des Zeichens Erfassen des Zeichens umfasst, wenn ein Schwankungsbereich zwischen einem Q-Wert des Ausgabetensors und einem Durchschnitt von Q-Werten von Ausgabetensoren für vergangene Iterationen größer oder gleich einem gewissen Schwellenwert ist.

5. Computerlesbares Aufzeichnungsmedium nach Anspruch 1 oder 2, wobei das Erfassen des Zeichens umfasst:

   Bestimmen, ob abgetastete Werte, die zum Berechnen eines Q-Werts verwendet werden, alle null sind, und
   basierend auf vergangenen Q-Werten, Erfassen des Zeichens, wenn die abgetasteten Werte alle null sind.

6. Computerlesbares Aufzeichnungsmedium nach Anspruch 1 oder 2, wobei das Erfassen des Zeichens Erfassen des Zeichens umfasst, wenn die Anzahl von Elementen des Ausgabetensors, der Überläufe oder Unterläufe erfährt, größer oder gleich einem gewissen Schwellenwert in Bezug auf die Anzahl von abzutastenden Elementen ist.

7. Computerlesbares Aufzeichnungsmedium nach Anspruch 1, wobei das Bestimmen, ob das Zurückkehren erlaubt ist, Wiederholen, eine erste gewisse Anzahl von Malen, von Training durch Vorgänge mit der gewissen Anzahl von Bits umfasst, und wenn eine Anomalie-Auftrittsrate nicht größer als eine zweite gewisse Anzahl von Malen ist, Bestimmen, dass das Zurückkehren zu Vorgängen mit der geringeren Anzahl von Bits erlaubt ist.

8. Informationsverarbeitungsverfahren, das von einem Computer (100) ausgeführt wird, wobei das Verfahren umfasst:

Erfassen, in Deep Learning, eines Zeichens eines Ausfalls beim Erlernen von Festkommavorgängen, die durchgeführt werden unter Verwendung von Informationen über Eingabetensoren, um einen Ausgabetensor auszugeben, und mit einer geringeren Anzahl von Bits durchgeführt werden, verglichen mit Vorgängen, die mit einer gewissen Anzahl von Bits durchgeführt werden, basierend auf einem Q-Wert jedes der Eingabetensoren oder einem Q-Wert des Ausgabetensors, wobei der Q-Wert ein Wert ist, der basierend auf einer Verteilung jeweiliger Dezimalpunktpositionen von Elementen eines Tensors bestimmt wird;

Zurücksetzen zu einem Vorgang, bei dem das Zeichen erfasst wird, und Durchführen einer erneuten Berechnung durch einen Vorgang mit der gewissen Anzahl von Bits;

Bestimmen, ob Zurückkehren von Vorgängen mit der gewissen Anzahl von Bits zu Vorgängen mit der geringeren Anzahl von Bits erlaubt ist; und

wenn das Zurückkehren zu Vorgängen mit der geringeren Anzahl von Bits erlaubt ist, Umschalten zu Vorgängen mit der geringeren Anzahl von Bits.

9. Informationsverarbeitungsgerät (100), umfassend eine Steuereinheit (110), die konfiguriert ist, um einen Prozess auszuführen, umfassend:

Erfassen, in Deep Learning, eines Zeichens eines Ausfalls beim Erlernen von Festkommavorgängen, die durchgeführt werden unter Verwendung von Informationen über Eingabetensoren, um einen Ausgabetensor auszugeben, und mit einer geringeren Anzahl von Bits durchgeführt werden, verglichen mit Vorgängen, die mit einer gewissen Anzahl von Bits durchgeführt werden, basierend auf einem Q-Wert jedes der Eingabetensoren oder einem Q-Wert des Ausgabetensors, wobei der Q-Wert ein Wert ist, der basierend auf einer Verteilung jeweiliger Dezimalpunktpositionen von Elementen eines Tensors bestimmt wird;

Zurücksetzen zu einem Vorgang, bei dem das Zeichen erfasst wird, und Durchführen einer erneuten Berechnung durch einen Vorgang mit der gewissen Anzahl von Bits;

Bestimmen, ob Zurückkehren von Vorgängen mit der gewissen Anzahl von Bits zu Vorgängen mit der geringeren Anzahl von Bits erlaubt ist; und

wenn das Zurückkehren zu Vorgängen mit der geringeren Anzahl von Bits erlaubt ist, Umschalten zu Vorgängen mit der geringeren Anzahl von Bits.

10. Informationsverarbeitungsgerät (100) nach Anspruch 9, wenn das Umschalten zu Vorgängen mit der geringeren Anzahl von Bits Umschalten zu Deep Learning-Ganzzahlvorgängen oder quantisierten Ganzzahlvorgängen umfasst.

11. Informationsverarbeitungsgerät (100) nach Anspruch 9 oder 10, wobei das Erfassen des Zeichens Erfassen des Zeichens umfasst, wenn eine Differenz zwischen Q-Werten der Eingabetensoren außerhalb eines erlaubten Bereichs liegt.

12. Informationsverarbeitungsgerät (100) nach Anspruch 9 oder 10, wobei das Erfassen des Zeichens Erfassen des Zeichens umfasst, wenn ein Schwankungsbereich zwischen einem Q-Wert des Ausgabetensors und einem Durchschnitt von Q-Werten von Ausgabetensoren für vergangene Iterationen größer oder gleich einem gewissen Schwellenwert ist.

13. Informationsverarbeitungsgerät (100) nach Anspruch 9 oder 10, wobei das Erfassen des Zeichens umfasst:

Bestimmen, ob abgetastete Werte, die zum Berechnen eines Q-Werts verwendet werden, alle null sind, und basierend auf vergangenen Q-Werten, Erfassen des Zeichens, wenn die abgetasteten Werte alle null sind.

14. Informationsverarbeitungsgerät (100) nach Anspruch 9 oder 10, wobei das Erfassen des Zeichens Erfassen des Zeichens umfasst, wenn die Anzahl von Elementen des Ausgabetensors, der Überläufe oder Unterläufe erfährt, größer oder gleich einem gewissen Schwellenwert in Bezug auf die Anzahl von abzutastenden Elementen ist.

15. Informationsverarbeitungsgerät (100) nach Anspruch 9, wobei das Bestimmen, ob das Zurückkehren erlaubt ist, Wiederholen, eine erste gewisse Anzahl von Malen, von Training durch Vorgänge mit der gewissen Anzahl von Bits umfasst, und wenn eine Anomalie-Auftrittsrate nicht größer als eine zweite gewisse Anzahl von Malen ist, Bestimmen dass das Zurückkehren zu Vorgängen mit der geringeren Anzahl Bits erlaubt ist.

**Revendications**

1. Support d'enregistrement lisible par ordinateur sur lequel est stocké un programme qui amène un ordinateur (100) à exécuter un processus comprenant :

   détecter, en apprentissage profond, un signe d'échec d'apprentissage dans les opérations à point fixe qui sont effectuées, en utilisant des informations sur des tenseurs d'entrée, pour sortir un tenseur de sortie et effectuées avec un nombre inférieur de bits par rapport aux opérations qui sont effectuées avec un certain nombre de bits, sur la base d'une valeur Q de chacun des tenseurs d'entrée ou d'une valeur Q du tenseur de sortie, dans lequel la valeur Q est une valeur déterminée sur la base d'une distribution de positions de points décimaux respectives d'éléments d'un tenseur ;

   revenir à une opération où le signe est détecté et effectuer un recalcul par une opération avec le certain nombre de bits ;
   déterminer si le retour des opérations avec un certain nombre de bits à des opérations avec un nombre inférieur de bits est autorisé ; et
   lorsque le retour aux opérations avec le nombre inférieur de bits est autorisé, commuter vers des opérations avec le nombre inférieur de bits.

2. Support d'enregistrement lisible par ordinateur selon la revendication 1, dans lequel la commutation vers des opérations avec le nombre inférieur de bits comprend la commutation vers des opérations de nombres entiers d'apprentissage profond ou des opérations de nombres entiers quantifiés.

3. Support d'enregistrement lisible par ordinateur selon la revendication 1 ou 2, dans lequel la détection du signe comprend la détection du signe lorsqu'une différence entre des valeurs Q des tenseurs d'entrée est en dehors d'une plage autorisée.

4. Support d'enregistrement lisible par ordinateur selon la revendication 1 ou 2, dans lequel la détection du signe comprend la détection du signe lorsqu'une plage de variation entre une valeur Q du tenseur de sortie et une moyenne de valeurs Q de tenseurs de sortie pour des itérations passées est supérieure ou égale à un certain seuil.

5. Support d'enregistrement lisible par ordinateur selon la revendication 1 ou 2, dans lequel la détection du signe comprend :

   déterminer si des valeurs échantillonnées à utiliser pour calculer une valeur Q sont toutes égales à zéro, et
   sur la base des valeurs Q passées, détecter le signe lorsque les valeurs échantillonnées sont toutes égales à zéro.

6. Support d'enregistrement lisible par ordinateur selon la revendication 1 ou 2, dans lequel la détection du signe comprend détecter le signe lorsque le nombre d'éléments du tenseur de sortie subissant des dépassements ou soupassements de capacité est supérieur ou égal à un certain seuil par rapport au nombre d'éléments à échantillonner.

7. Support d'enregistrement lisible par ordinateur selon la revendication 1, dans lequel la détermination si le retour est autorisé comprend la répétition, un premier certain nombre de fois, de l'apprentissage par des opérations avec un certain nombre de bits et, lorsqu'un taux d'occurrence d'anomalies n'est pas supérieur à un second certain nombre de fois, déterminer que le retour à des opérations avec un nombre inférieur de bits est autorisé.

8. Procédé de traitement d'informations exécuté par un ordinateur (100), le procédé comprenant :

   détecter, en apprentissage profond, un signe d'échec d'apprentissage dans les opérations à point fixe qui sont effectuées, en utilisant des informations sur des tenseurs d'entrée, pour sortir un tenseur de sortie et effectuées avec un nombre inférieur de bits par rapport aux opérations qui sont effectuées avec un certain nombre de bits, sur la base d'une valeur Q de chacun des tenseurs d'entrée ou d'une valeur Q du tenseur de sortie, dans lequel la valeur Q est une valeur déterminée sur la base d'une distribution de positions de points décimaux respectives d'éléments d'un tenseur ;
   revenir à une opération où le signe est détecté et effectuer un recalcul par une opération avec un certain nombre de bits ;
   déterminer, si le retour des opérations avec un certain nombre de bits à des opérations avec un nombre inférieur de bits est autorisé ; et

lorsque le retour aux opérations avec le nombre inférieur de bits est autorisé, commuter vers des opérations avec le nombre inférieur de bits.

9. Appareil de traitement d'informations (100) comprenant un contrôleur (110) configuré pour exécuter un processus comprenant :

détecter, en apprentissage profond, un signe d'échec d'apprentissage dans les opérations à point fixe qui sont effectuées, en utilisant des informations sur des tenseurs d'entrée, pour sortir un tenseur de sortie et effectuées avec un nombre inférieur de bits par rapport aux opérations qui sont effectuées avec un certain nombre de bits, sur la base d'une valeur Q de chacun des tenseurs d'entrée ou d'une valeur Q du tenseur de sortie, dans lequel la valeur Q est une valeur déterminée sur la base d'une distribution de positions de points décimaux respectives d'éléments d'un tenseur ;
revenir à une opération où le signe est détecté et effectuer un recalcul par une opération avec un certain nombre de bits ;
déterminer si le retour des opérations avec un certain nombre de bits à des opérations avec un nombre inférieur de bits est autorisé ; et
lorsque le retour aux opérations avec le nombre inférieur de bits est autorisé, commuter vers des opérations avec le nombre inférieur de bits.

10. Appareil de traitement d'informations (100) selon la revendication 9, dans lequel la commutation vers des opérations avec le nombre inférieur de bits comprend la commutation vers des opérations de nombres entiers d'apprentissage profond ou des opérations de nombres entiers quantifiés.

11. Appareil de traitement d'informations (100) selon la revendication 9 ou 10, dans lequel la détection du signe comprend la détection du signe lorsqu'une différence entre des valeurs Q des tenseurs d'entrée est en dehors d'une plage autorisée.

12. Appareil de traitement d'informations (100) selon la revendication 9 ou 10, dans lequel la détection du signe comprend la détection du signe lorsqu'une plage de variation entre une valeur Q du tenseur de sortie et une moyenne de valeurs Q de tenseurs de sortie pour des itérations passées est supérieure ou égale à un certain seuil.

13. Appareil de traitement d'informations (100) selon la revendication 9 ou 10, dans lequel la détection du signe comprend :

déterminer si des valeurs échantillonnées à utiliser pour calculer une valeur Q sont toutes égales à zéro, et sur la base des valeurs Q passées, détecter le signe lorsque les valeurs échantillonnées sont toutes égales à zéro.

14. Appareil de traitement d'informations (100) selon la revendication 9 ou 10, dans lequel la détection du signe comprend détecter le signe lorsque le nombre d'éléments du tenseur de sortie subissant des dépassements ou soupassements de capacité est supérieur ou égal à un certain seuil par rapport au nombre d'éléments à échantillonner.

15. Appareil de traitement d'informations (100) selon la revendication 9, dans lequel la détermination si le retour est autorisé comprend la répétition, un premier certain nombre de fois, de l'apprentissage par des opérations avec un certain nombre de bits et, lorsqu'un taux d'occurrence d'anomalies n'est pas supérieur à un second certain nombre de fois, déterminer que le retour à des opérations avec un nombre inférieur de bits est autorisé.

# FIG.1

COMPUTATIONAL GRAPH

Iteration = i

Layer 1    Layer 2    Layer 3

Iteration = i + 1

Layer 1   Layer 2   Layer 3

COMPUTATION NODE

→ FLOW OF TENSORS

PROBLEM
THAT USER DESIRES
TO SOLVE

100

INFORMATION
PROCESSING
APPARATUS

SOLUTION OF
PROBLEM

# FIG.2

# FIG.3

INFORMATION PROCESSING APPARATUS ⌐100

CONTROL UNIT ⌐110

Q-VALUE CALCULATION FUNCTION

ABNORMALITY DETECTION FUNCTION

ROLLBACK FUNCTION

RETURN FUNCTION

ARITHMETIC UNIT ⌐120

DEEP LEARNING CALCULATOR ⌐130

DATABASE ⌐140

# FIG.4

# FIG.5

BASED ON ABNORMALITY OCCURRENCE OPERATION ID, PERFORM RECALCULATION AFTER ROLLING BACK TO NODE WHERE ABNORMALITY HAS OCCURRED

PROCEED TO NEXT OPERATION WITHOUT WAITING FOR COMPLETION OF Q-VALUE CALCULATION AND CHECK

MAIN PROCESS

NG

ROLLBACK

OK

A    B    C

CHECK FOR DL-INT ABNOR-MALITY FLAG

OUTPUT TENSOR
OPERATION ID: B

EXECUTE Q-VALUE CALCULATION AND CHECK ASYNCHRONOUSLY

SUB-PROCESS

DL-INT DECIMAL-POINT VALUE ANALYSIS FUNCTION

ABNORMALITY DETECTION FUNCTION (2)

DL-INT ABNORMALITY FLAG

ABNORMALITY OCCURRENCE OPERATION ID

Q-VALUE CALCULATION FUNCTION

DL-INT TYPE OPERATION

FP32 TYPE OPERATION

FLOW OF OPERATIONS

ASYNCHRONOUS EXECUTION

REFERENCE ABNORMALITY FLAG AND ABNORMALITY OCCURRENCE OPERATION ID

DATA

FUNCTIONAL BLOCK

WRITING INTO DATABASE

HAS ABNORMALITY OCCURRED?

NO ABNORMALITY

REGISTER Q-VALUE

DATABASE    140

EP 4 109 352 B1

## FIG.6

(1) TRAINING HAS BEEN REPEATED K TIMES
(2) ABNORMALITY OCCURRENCE RATE IS NOT GREATER THAN X%

Float (Retry)

DL-INT Disable

OCCURRENCE OF ABNORMALITY

DL-INT Enable

| OPERATION STATUS | CONDITIONS FOR TRANSITION | DATA TYPE OF OPERATION |
|---|---|---|
| DL-INT Enable | IMMEDIATELY PRECEDING STATE IS DL-INT Retry | DL-INT |
| DL-INT Disable | INPUT TENSORS INCLUDE FP32 | FP32 |
| | IMMEDIATELY PRECEDING ITERATION IS FP32 | |
| DL-INT Retry | RETURN CONDITIONS (1) AND (2) HAVE BEEN SATISFIED | FP32 |

EP 4 109 352 B1

# FIG.7

MAIN PROCESS

OPERATION

CHECK ON INTERNAL STATE

FUNCTION TO CHECK ON RETURN PROCESSING

STATUS COUNTER

UPDATE INTERNAL STATE

REFERENCE INTERNAL STATE

INTERNAL STATE

UPDATE INTERNAL STATE

STATUS COUNTER RETAINS COUNTS FOR CORRESPONDING STATUSES IN PAST L ITERATIONS.
TO CHECK FOR THE FOLLOWING CONDITIONS, OBTAIN FROM VALUES ON COUNTERS: NUMBER OF TIMES OF DL-INT Disable AMONG PAST L ITERATIONS; AND RETRY RATE (= NUMBER OF TIMES OF DL-INT Retry AMONG PAST L ITERATIONS ÷ NUMBER OF TIMES OF DL-INT Enable AMONG PAST L ITERATIONS × 100)
(1) LEARNING HAS BEEN REPEATED N TIMES WITH STATE BEING DL-INT Disable
(2) RETRY RATE IS NOT GREATER THAN X%
UPDATE INTERNAL STATE TO DL-Retry WHEN CONDITIONS (1) AND (2) ARE BOTH SATISFIED

# FIG.8

**Legend:**

| Pattern | Description |
| --- | --- |
| (diagonal hatch) | NUMERICAL DATA (MULTIDIMENSIONAL MATRIX), WHICH IS DATA TYPE THAT NEEDS CORRESPONDING Q-VALUE TO READ IN FORM OF DL-INT |
| (dotted) | Q-VALUE OF 32-BIT OR 64-BIT SCALAR INTEGER TYPE |
| (sparse dots) | TENSOR, WHICH IS STRUCTURE IN WHICH DATA NEEDED FOR OPERATIONS ARE INCLUDED AS MEMBERS |
| (cross-hatch cylinder) | DATABASE OF Q-VALUES |
| ⟶ (bold arrow) | FLOW OF TENSORS |
| → (thin arrow) | FLOW OF NUMERICAL DATA AND Q-VALUES |
| ⇢ (dashed arrow) | REFERENCING OF OR WRITING INTO DATABASE |

# FIG.9

| OPERATION ID | ... | t-2 | t-1 | t | t+1 | ... |
|---|---|---|---|---|---|---|
| OPERATION-1 | ... | Q[1][t-2] | Q[1][t-1] | Q[1][t] | – | ... |
| OPERATION-2 | ... | Q[2][t-2] | Q[2][t-1] | Q[2][t] | – | ... |
| OPERATION-3 | ... | Q[3][t-2] | Q[3][t-1] | – | – | ... |
| ... | ... | ... | ... | – | – | ... |

# FIG.10

EP 4 109 352 B1

# FIG.11

START PROCESSING

DL-INT

HAS THIS PROCESSING STARTED BY ROLLBACK?

YES → CONVERT NUMERICAL DATA INTO FP32

NO

CHECK FOR DL-INT ABNORMALITY FLAG OF ABNORMALITY DETECTION FUNCTION (2)

OPERATION (FP32)

IS DL-INT ABNORMALITY FLAG OF ABNORMALITY DETECTION FUNCTION ON?

YES → ACQUIRE ABNORMALITY OCCURRENCE OPERATION ID OF ABNORMALITY DETECTION FUNCTION (2)

NO

ACQUIRE NUMERICAL DATA AND Q-VALUE FROM INPUT TENSOR

BASED ON ABNORMALITY OCCURRENCE OPERATION ID, ROLL BACK TO OPERATION WHERE ABNORMALITY HAS BEEN DETECTED

DOES INPUT Q-VALUE SATISFY CONDITIONS SPECIFIC TO OPERATION?

NO → CONVERT NUMERICAL DATA INTO FP32

YES

ACQUIRE Q-VALUE OF OUTPUT TENSOR FROM DATABASE

OPERATION (FP32)

OPERATION (DL-INT)

TO OUTPUT TENSOR, APPLY NUMERICAL DATA OF OUTPUT RESULT AND Q-VALUE ACQUIRED FROM DATABASE

FEED Q-VALUE CALCULATION PROCESSING INTO SUB-PROCESS

PROCEED TO NEXT OPERATION

# FIG.12

# FIG.13

100

INFORMATION PROCESSING APPARATUS

100c
MEMORY

100d
PROCESSOR

100a
COMMUNI-
CATION UNIT

100b
HDD

**EP 4 109 352 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7084975 A
- JP 2019125014 A
- JP 2020161031 A
- US 5845051 A
- WO 2018139266 A
- WO 2020190526 A1